(19) Europäisches Patentamt / European Patent Office / Office européen des brevets

(11) **EP 2 909 649 B1**

(12) **FASCICULE DE BREVET EUROPEEN**

(45) Date de publication et mention de la délivrance du brevet:
**28.03.2018 Bulletin 2018/13**

(21) Numéro de dépôt: **13783289.5**

(22) Date de dépôt: **18.10.2013**

(51) Int Cl.:
*G01S 7/481* (2006.01)       *G01S 17/08* (2006.01)
*G01S 17/66* (2006.01)       *G01S 7/487* (2006.01)

(86) Numéro de dépôt international:
**PCT/EP2013/071895**

(87) Numéro de publication internationale:
**WO 2014/060599 (24.04.2014 Gazette 2014/17)**

(54) **TELEMETRIE LONGUE PORTEE DE PETITE CIBLE**

WEITREICHENDE ENTFERNUNGSMESSUNG FÜR KLEINE ZIELE

LONG-RANGE, SMALL TARGET RANGEFINDING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.10.2012 FR 1202785**

(43) Date de publication de la demande:
**26.08.2015 Bulletin 2015/35**

(73) Titulaire: **Thales**
**92400 Courbevoie (FR)**

(72) Inventeur: **ROUSSEAU, Pascal**
**F-78220 Viroflay (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**WO-A1-2010/063805       GB-A- 2 252 398**
**US-A- 4 830 485          US-A1- 2004 004 707**
**US-A1- 2004 021 852       US-B1- 6 323 941**

**Description**

Le domaine de l'invention est celui de la télémétrie laser.

Un télémètre permet la mesure de la distance le séparant d'une cible. Un télémètre optique utilise la propagation de la lumière comme moyen de mesure, il est composé d'un émetteur et d'un récepteur. Il émet de la lumière en direction de la cible et détecte une fraction de cette lumière retournée par la cible. La distance est obtenue à partir du temps de propagation aller de la lumière jusqu'à la cible et retour de la lumière jusqu'au récepteur. L'émission est modulée temporellement. La lumière émise transporte cette modulation jusqu'à la cible. La cible réfléchit ou rétrodiffuse cette lumière. Une fraction de cette lumière retournée transporte la modulation jusqu'au récepteur du télémètre. La mesure du temps écoulé entre l'identification de la modulation de départ du télémètre et l'identification de la modulation de son retour par le récepteur permet de calculer la distance entre le télémètre et la cible à partir de la vitesse de propagation de la lumière dans les milieux traversés.

Typiquement, un télémètre comprend un dispositif d'émission, comprenant un émetteur et son optique de mise en forme du faisceau laser, un dispositif de réception comprenant une optique de collecte et de focalisation sur le plan focal des échos laser rétrodiffusés par la cible, et un dispositif de traitement pour le pilotage de l'émission et de la réception et permettant l'élaboration de la distance.

L'écho optique de la cible est converti en signal électrique par le détecteur, le signal électrique se superposant aux bruits. Le signal filtré et amplifié obtenu en fin de chaîne de détection est numérisé.

Une trame est constituée d'une série de données échantillonnées pendant la durée comptée à partir de l'émission de l'impulsion et pendant le temps d'un aller-retour correspondant à la distance maximale d'utilisation ou pendant la durée correspondant au sous-domaine de distance recherchée. La fréquence d'échantillonnage est choisie afin d'optimiser l'extraction du signal de l'écho des bruits et permettre la résolution et la précision en distance attendue. Par exemple, une fréquence d'échantillonnage de 59,94 MHz permettrait un pas de distance de 2,5 m.

Différentes solutions ont été mises en oeuvre pour améliorer la portée d'un télémètre laser.

Une première solution consiste à augmenter l'énergie émise par impulsion. Mais, l'augmentation est limitée par des contraintes de sécurité oculaire et par l'augmentation de volume et de consommation d'énergie du dispositif d'émission.

Une autre solution consiste à augmenter la surface de la pupille de réception. Cette solution est, elle aussi, limitée par des contraintes d'encombrement et de poids du télémètre.

Dans le cas où les dimensions de la cible seraient plus petites que les dimensions de la tache faite par le laser au niveau de la cible, seule la fraction de lumière déposée sur la cible contribue à la télémétrie. Cette fraction est dépendante de la qualité du faisceau laser déterminant la taille de la tâche, et du pointé du faisceau vers la cible.

Dans des conditions idéales, le faisceau laser est très faiblement divergent et parfaitement pointé vers la cible, toute la lumière émise contribue à la télémétrie. Or, la ligne de visée est rarement en direction de la partie la plus contributive au sens de la télémétrie, la partie la plus contributive étant une zone qui retourne la plus grande fraction de l'émission par réflexion ou rétrodiffusion vers le dispositif de réception. Pour éviter des pertes importantes de performance, dès que la ligne de visée n'est pas en direction de la partie la plus contributive de la cible, il est nécessaire d'augmenter la divergence du faisceau, au détriment de la portée du télémètre.

Dans le cas de cibles non coopératives, l'émission laser est le plus souvent impulsionnelle. Une cible est coopérative lorsque la cible favorise le retour de la lumière en direction de l'émetteur à l'aide de coin de cube par exemple.

Dans le cas d'une télémétrie impulsionnelle, le signal issu du détecteur est composé du bruit de la chaîne de détection, du bruit optique collecté dans le champ de réception et de l'écho de la cible attendu. Quand le signal est suffisamment important, la détection du moment d'arrivée de l'écho se fait par seuillage. Autrement dit, une cible est détectée si l'intensité de l'écho est supérieure à un seuil fixé au préalable au-dessus du niveau des bruits.

Le signal au moment du seuillage est la somme du signal amplifié venant de la détection de l'écho et des bruits optiques et électroniques. Pour une cible, le signal aura une amplitude variable d'une impulsion à l'autre. Pour un signal au voisinage du niveau du seuil, le signal ne dépassera pas toujours le seuil. Lorsque le signal est inférieur au seuil il n'y a pas détection. Si à aucun moment un signal ne dépasse le seuil, l'écho est absent ou trop faible.

L'observation peut se faire à partir du départ de l'impulsion pendant une durée correspondant à la distance maximale recherchée, par exemple 533 μs pour une distance maximale de 80 km. L'observation peut également se faire pendant une durée correspondant à un sous-domaine de distance, par exemple pendant une durée correspondant au sous-domaine compris entre 40 et 50 Km.

Une autre possibilité pour améliorer la probabilité de détection de la cible pendant un intervalle de temps donné est d'augmenter la cadence de répétition des impulsions.

Pour améliorer la détection des échos de la cible vis-à-vis des bruits, il est possible de combiner les signaux de détection suite à plusieurs impulsions. Il peut être procédé à la combinaison de plusieurs signaux de détection suivant un procédé de post-intégration. Cette méthode est ancienne, elle a été mise en oeuvre avec des procédés analogiques mais elle est toujours d'actualité à l'époque numérique.

Le traitement de post-intégration est une manière de combiner les trames de signaux détectés suite à chaque impulsion.

Pour un télémètre donné, l'étape de post-intégration permet d'améliorer les gains de manière significative lorsque la distance entre le télémètre et la cible est suffisamment stable pendant la durée de la mesure.

Dans le cas où le télémètre serait bien pointé sur la cible la probabilité de la présence de l'écho de la cible dans chaque trame est de 1. Si la distance entre le télémètre et la cible varie peu au cours de la phase de post-intégration, à chaque pas de distance, les données de trames sont additionnées. Le signal S attendu est additionné linéairement, il est donc proportionnel à N, N étant le nombre de trames, $\sum_{N} S \propto N$. Du fait de leur nature, les bruits de détection B se somment quadratiquement, l'amplitude du bruit est proportionnelle à la racine carrée du nombre de trames, $\sum_{N} B \propto \sqrt{N}$. Le rapport entre l'intensité du signal attendu et l'intensité du bruit sera proportionnel à la racine carrée du nombre de trames, $\frac{\sum_{N} S}{\sum_{N} B} \propto \sqrt{N}$.

Autrement dit, pour une étape de post-intégration sur N trames ayant une probabilité de présence de l'écho de la cible dans une trame de 1, le rapport entre l'intensité du signal et l'intensité du bruit S/B est proportionnel à $\sqrt{N}$.

Lors d'une poursuite difficile d'une cible mobile, notamment lorsque les dimensions de la cible sont inférieures aux dimensions de la tache du laser au niveau de la cible, certaines trames ne contiennent aucune information relative à la présence d'un écho de la cible. La post-intégration appliquée à toutes les trames n'a pas l'efficacité attendue. Des trames ne contenant que du bruit sont ainsi ajoutées aux trames contenant aussi un écho de la cible. La probabilité d'un écho de la cible dans une trame affecte donc directement le gain attendu par l'étape de post-intégration.

Lorsque la probabilité de présence de la cible sur la tache du laser à son niveau est de 1/a c'est-à-dire que seule une trame sur a trames comprend un écho de la cible, le rapport entre l'intensité du signal et l'intensité du bruit S/B est proportionnel à $\frac{\sqrt{N}}{a}$. Il faut donc $a^2.N$ trames pour le même rapport entre l'intensité du signal et l'intensité du bruit $\sqrt{N}$ que celui obtenu en n trames lorsque la probabilité de présence de l'écho est de 1. Pour obtenir par exemple un gain de 10 ($\sqrt{N}$ = 10) suite à l'étape de post-intégration, cela nécessite la sommation de 100 trames. Si la probabilité de présence de l'écho de la cible dans une trame est de ½ alors un gain de 10 sera obtenu par la sommation de $2^2.100=400$ trames.

Un but de l'invention est d'améliorer les performances d'un télémètre utilisant une étape de post-intégration en utilisant l'invention précédemment décrite dans la demande de brevet EP 2364455. Cette demande de brevet EP 2364455 propose un dispositif de réception de télémétrie capable de détecter temporellement et spatialement l'écho fourni par la cible éclairée par l'impulsion laser.

La détection temporelle permet la mesure de la distance, par la mesure du temps de vol de l'impulsion, elle peut être faite au moyen d'un ou plusieurs détecteurs.

La détection spatiale peut être obtenue au moyen d'un ou plusieurs détecteurs. Cette détection, à partir d'une ou plusieurs impulsions, permet de repérer la direction d'où vient le maximum de lumière rétrodiffusée par la cible ou l'absence de cible. Ce maximum de lumière résulte de l'interaction de la cible avec la tache de l'impulsion laser. Il est ainsi possible de recentrer la direction d'émission pour maximiser l'efficacité du télémètre.

La bande passante nécessaire à la détection temporelle est très grande comparativement à celle de la détection spatiale ce qui augmente les bruits de la chaîne de détection temporelle. En conséquence, la détection spatiale est beaucoup plus sensible que la détection temporelle.

Selon un aspect de l'invention, il est proposé un dispositif de mesure d'une distance d'une cible au moyen d'un télémètre comprenant :

- un émetteur à impulsion laser,

- un récepteur des échos laser rétrodiffusés par la cible, comportant

  un dispositif de détection spatiale qui comprend au moins une photodiode montée en intégrateur et est apte à fournir un signal dit spatial, et
  un dispositif de détection temporelle qui comprend au moins une photodiode couplée à un circuit transimpédance et est apte à fournir un signal dit temporel,

- des moyens de traitement du signal spatial et du signal temporel, comportant une unité de calcul de la distance de la cible, le signal temporel étant sous la forme d'une trame de données qui est l'enregistrement de données détectées pendant une durée prédéterminée.

Il est principalement caractérisé en ce que les moyens de traitement comprennent :

- des moyens de post-intégration de signaux temporels, reliés en sortie à l'unité de calcul de la distance de la cible,

- reliés au dispositif de détection spatiale et au dispositif de détection temporelle, des moyens de sélection des signaux temporels à transmettre aux moyens de post-intégration, en fonction du signal spatial.

En d'autres termes, le télémètre proposé comprend un émetteur d'impulsion laser, un récepteur permettant de fournir une information spatiale et des trames de données, et des moyens de traitement de l'information spatiale et des trames de données pour réaliser une post-intégration sélective de ces trames de données.

Le télémètre selon l'invention est configuré pour sélectionner et adapter le traitement des trames à partir de l'information spatiale.

La capacité du télémètre à détecter spatialement la cible et à marquer les trames issues de la détection temporelle contenant a priori une information relative à la présence d'un écho de la cible permet de limiter les inconvénients des impulsions laser émises et qui n'atteignent pas la cible.

Selon un premier mode de réalisation, les moyens de sélection des signaux temporels comportent une commande de commutation reliée en sortie au dispositif de détection temporelle via un commutateur, et reliée en entrée au dispositif de détection spatiale et apte à commuter le dispositif de détection temporelle via le commutateur en fonction du signal spatial, et en ce que les moyens de post-intégration sont reliés en entrée au dispositif de détection temporelle. Selon ce mode de réalisation, toutes les trames issues du détecteur temporel sont transmises aux moyens de post-intégration, car la sélection est intervenue en amont de la détection temporelle.

Selon une variante de ce mode de réalisation, la commande de commutation est en outre reliée aux moyens de post-intégration.

Selon un deuxième mode de réalisation, les moyens de sélection des signaux temporels sont des moyens de discrimination qui sont reliés en entrée au dispositif de détection spatiale et au dispositif de détection temporelle et en sortie aux moyens de post-intégration. Selon ce mode de réalisation, seulement certaines trames issues du détecteur temporel sont transmises aux moyens de post-intégration, car la sélection intervient en aval de la détection temporelle.

Avantageusement, l'unité de traitement comprend des moyens de repérage temporel ou de datation des trames ce qui permet un traitement par post-intégration lorsqu'on détecte une cible mobile.

Avantageusement, le récepteur comprend en outre un volet de protection afin de protéger le récepteur lorsqu'aucune détection n'est nécessaire.

Avantageusement, le télémètre comprend en outre un dispositif d'alignement de la direction d'émission et de la voie de réception.

Avantageusement, le télémètre comprend en outre des moyens de détection d'une présence d'une cible pour des distances inférieures à la distance minimale de télémétrie. Suivant les télémètres, cette distance minimale peut être de 50 à 500 m. Ces moyens de détection permettent de désactiver le fonctionnement de l'émission laser et d'assurer la sécurité oculaire du dispositif à partir de la distance nulle.

Avantageusement, l'émetteur laser comprend des moyens pour adapter la divergence et pour collimater le faisceau laser à l'infini.

Avantageusement, le télémètre comprend en outre des moyens d'orientation de l'axe de télémétrie.

Avantageusement, le télémètre comprend des moyens de mesure d'écartométrie entre l'axe de télémétrie et la position de la cible, les moyens de mesure étant connectés au détecteur spatial.

Les moyens d'orientation de l'axe de télémétrie associés à la mesure d'écartométrie permettent une poursuite de la cible mobile.

Avantageusement, le télémètre a la capacité de poursuite de la cible, à partir des informations de détection spatiale, en modifiant l'agencement spatial des détecteurs spatiaux et temporels, suivant l'invention précédemment décrite dans la demande de brevet EP 2364455.

Selon un autre aspect de l'invention, il est proposé un procédé de mesure de la distance d'une cible au moyen d'un télémètre tel que décrit précédemment et comprenant :

- une étape de détection spatiale comprenant une sous-étape d'émission d'une impulsion laser par le dispositif d'émission, une sous-étape de détection du signal spatial $S_S$ et d'acquisition d'une valeur I d'intégration de $S_S$,

- une étape de détection temporelle comprenant une sous-étape d'émission d'impulsions laser par le dispositif d'émission, et une sous-étape d'acquisition d'un signal temporel $S_T$ sous forme de trames de données,

- une étape de post-intégration des trames de données $S_T$ en fonction du signal spatial $S_S$,

- lorsque le résultat de la post-intégration est supérieur à un seuil, une étape de calcul de la distance

Selon un premier mode de fonctionnement de l'invention, la détection spatiale et la détection temporelle sont séquentielles et le procédé de mesure de la distance d'une cible est assuré au moyen d'un télémètre selon le premier mode de réalisation ; il comprend les étapes séquentielles suivantes :

- une étape de détection spatiale comprenant une sous-étape d'émission d'une impulsion laser par le dispositif d'émission, une sous-étape de détection du signal spatial $S_S$ correspondant à l'écho laser de ladite impulsion et d'acquisition d'une valeur I d'intégration de $S_S$ par les moyens de commutation, et lorsque la valeur I est inférieure à un seuil prédéterminé S1, l'étape précédente est réitérée,

- sinon une cible ayant alors été détectée, une étape de détection temporelle est mise en oeuvre comprenant une sous-étape d'émission d'autres impulsions laser par le dispositif d'émission, et une sous-étape d'acquisition d'un signal temporel $S_T$ sous forme de trames de données, correspondant aux échos laser de ces autres impulsions,

- une étape de post-intégration des trames de données $S_T$ obtenues lors de l'étape de détection temporelle.

Selon une variante à ce mode de fonctionnement de l'invention, la détection spatiale et la détection temporelle sont séquentielles et le procédé de mesure de la distance d'une cible est assuré au moyen d'un télémètre selon le deuxième mode de réalisation comprend les étapes séquentielles suivantes:

- une étape de 1$^{ère}$ détection spatiale comprenant une sous-étape d'émission d'une impulsion laser par le dispositif d'émission, une sous-étape de détection du signal spatial $S_S$ correspondant à l'écho laser de ladite impulsion et d'acquisition d'une valeur I d'intégration de $S_S$, et lorsque la valeur I est inférieure à un seuil prédéterminé S1, les sous-étapes précédentes sont réitérées,

- sinon une cible ayant alors été détectée, une étape de détection temporelle est mise en oeuvre comprenant une sous-étape d'émission d'autres impulsions laser par le dispositif d'émission, et une sous-étape d'acquisition d'un signal temporel $S_T$ sous forme de trames de données dites groupe A de trames, correspondant aux échos laser de ces autres impulsions,

- une étape de post-intégration de ce groupe A de trames de données $S_T$ obtenues lors de l'étape de détection temporelle,

- une étape de détection temporelle est mise en oeuvre comprenant une sous-étape d'émission d'autres impulsions laser par le dispositif d'émission différentes de celles du groupe A, une sous-étape d'acquisition d'un signal temporel $S_T$ sous forme de trames de données dites groupe B de trames, correspondant aux échos laser de ces autres impulsions, et une sous-étape de mise en mémoire de ce groupe B de trames,

- une étape de 2è détection spatiale comprenant une sous-étape d'émission d'une impulsion laser par le dispositif d'émission, une sous-étape de détection du signal spatial $S_S$ correspondant à l'écho laser de ladite impulsion et d'acquisition d'une valeur I d'intégration de $S_S$.

- lorsque la valeur I est supérieure à un seuil prédéterminé S1 dès la première impulsion, la détection spatiale étant confirmée, une étape de post-intégration du groupe B de trames de données est activée. L'étape précédente de détection temporelle du groupe A est réitérée.

- lorsque la valeur I est inférieure à un seuil prédéterminé S1, les étapes précédentes à partir de la détection spatiale sont réitérées,

Selon un autre mode de fonctionnement de l'invention, la détection spatiale et la détection temporelle sont simultanées et le procédé de mesure de la distance d'une cible est assuré au moyen d'un télémètre selon le troisième mode de réalisation ; il comprend les étapes suivantes :

- une étape de détection spatiale comprenant une sous-étape d'émission d'une impulsion laser par le dispositif d'émission, une sous-étape de détection du signal spatial $S_S$ correspondant à l'écho laser de ladite impulsion et d'acquisition d'une valeur I d'intégration de $S_S$ par les moyens de sélection et une sous-étape simultanée de détection d'un signal temporel $S_T$ correspondant au même écho laser de ladite impulsion,

- lorsque la valeur I est inférieure à un seuil prédéterminé S1, l'étape précédente est réitérée,

- sinon une cible ayant alors été détectée, une étape de post-intégration des trames de données $S_T$ correspondantes, par les moyens de post-intégration.

Ces étapes sont répétées jusqu'à ce que la mesure de la distance entre la cible et le télémètre soit obtenue.

Le procédé selon l'invention permet de pondérer les trames de données en fonction du niveau d'intensité du signal spatial.

Préférentiellement, le procédé comprend en outre une étape de repérage temporel (ou datation) des trames préalablement à leur post-intégration.

Éventuellement, la cible à télémétrer est mobile. Dans ce cas, les étapes peuvent être réitérées pour différentes hypothèses de vitesse relative entre la cible et le télémètre.

L'invention sera mieux comprise à l'étude de quelques modes de réalisation décrits à titre d'exemples nullement limitatifs, et illustrés par des dessins annexés sur lesquels :

- les figures 1 représentent schématiquement des exemples de télémètre selon l'invention, qui varient selon les moyens de sélection utilisés,

- les figures 2 représentent des synoptiques de fonctionnement d'un télémètre selon l'invention, lorsque la détection spatiale est alternative à la détection temporelle (fig 2a et 2b), lorsque la détection spatiale est simultanée à la détection temporelle (fig 2c),

- la figure 3 représente des trames $S_T$ contenant une information représentative de la présence de l'écho d'une cible, la vitesse relative de la cible étant constante, en fonction du temps.

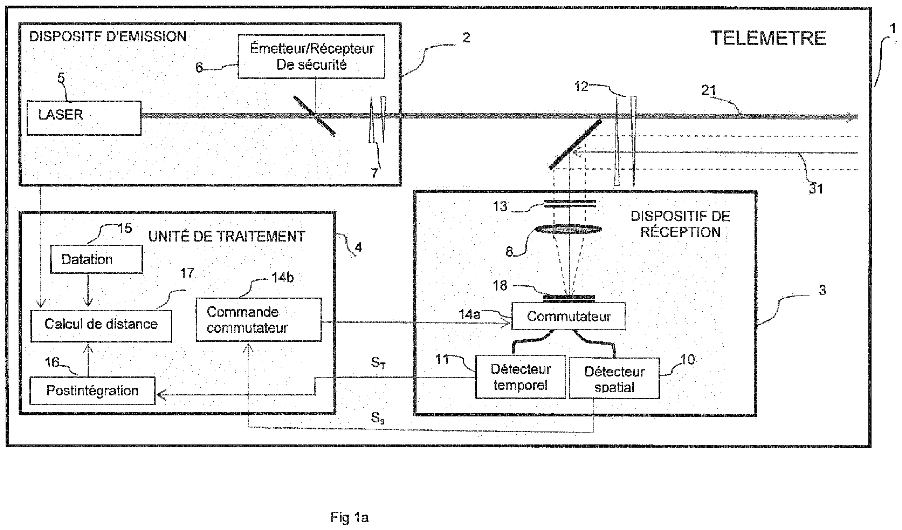

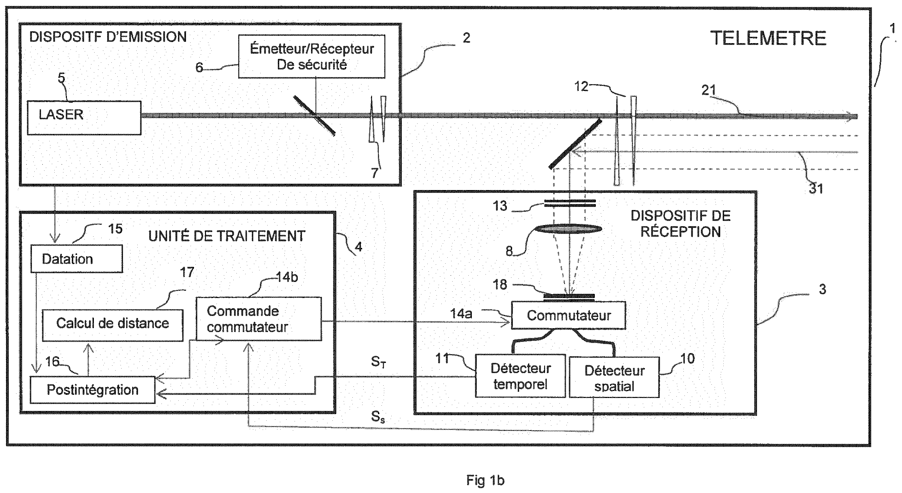

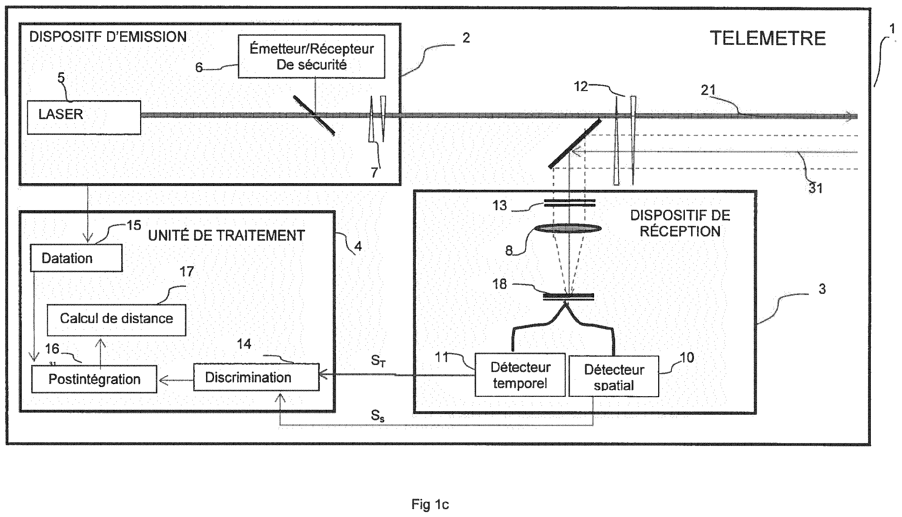

Le télémètre 1 représenté sur les figures 1, comprend un dispositif d'émission 2 d'un faisceau laser 21, un dispositif de réception 3 des échos rétrodiffusés 31 et une unité de traitement 4.

Le dispositif d'émission 2 d'un faisceau laser 21 comprend un émetteur d'impulsion laser 5 permettant une faible divergence. Préférentiellement, l'émetteur 5 d'impulsion laser est à haute fréquence. Avantageusement, le télémètre 1 comprend un dispositif comprenant un émetteur/récepteur secondaire 6 de sécurité, configuré pour la détection de la présence d'une cible située à une distance inférieure à la distance de télémétrie minimale et adapté pour arrêter le fonctionnement de l'émetteur laser 5 en cas de détection d'une cible à une distance inférieure à la distance de télémétrie minimale de manière à assurer la sécurité oculaire du télémètre 1. Typiquement, on entend par distance de télémétrie minimale une distance comprise entre 0 et 500 m.

Avantageusement, le dispositif d'émission 2 peut comprendre en outre une optique, non représentée, capable de mettre en forme le faisceau laser. En d'autres termes, à sa sortie de l'émetteur 5, le faisceau laser 21 est à la divergence attendue et collimaté à l'infini.

Avantageusement, le télémètre 1 comprend des moyens d'orientation 7 des émissions permettant de modifier la direction d'émission relativement à la réception.

Selon l'invention, la télémétrie d'une cible est effectuée comme suit. Le dispositif d'émission 2 émet un signal laser 21 impulsionnel et transmet éventuellement la date d'émission de l'impulsion 21 à l'unité de traitement 4.

Le dispositif de réception 3 des échos rétrodiffusés 31 comprend une optique 8 qui focalise les échos rétrodiffusés 31 sur un plan focal 18. Comme décrit dans la demande de brevet EP 2364455, ce plan focal peut être subdivisé en plusieurs zones élémentaires de détection. A chaque zone élémentaire, la détection peut être spatiale ou temporelle. Le dispositif de réception 3 peut comprendre des moyens d'aiguillage des échos rétrodiffusés 31 vers le détecteur spatial 10 ou le détecteur temporel 11, comme décrit dans la demande de brevet EP 2364455. Les détecteurs spatiaux 10 et temporels 11 peuvent être situés dans le plan focal 18, ou la lumière peut être transportée du plan focal vers les détecteurs 10, 11 par des moyens optiques tels que des miroirs ou des fibres optiques. Les détections spatiales et temporelles peuvent être faites soit par un unique détecteur associé à deux circuits de lecture distincts l'un dédié à la détection spatiale et l'autre à la détection temporelle soit par deux détecteurs distincts, l'un pour la détection temporelle et l'autre pour la détection spatiale. Un détecteur spatial 10 est typiquement une photodiode montée dans un circuit intégrateur. Le montage est à faible bruit. Durant la période d'intégration, les charges créées sont stockées puis, après la période d'intégration le circuit de lecture convertit ces charges en un signal proportionnel au nombre de charges collectées. La durée de l'intégration est adaptée au domaine ou au sous domaine de distance dans lequel peut se trouver la cible. La détection d'un signal très faible de l'ordre de quelques dizaines de photons est possible. Un détecteur temporel 11 est typiquement une photodiode de type PIN, une photodiode à avalanche ou une photodiode à grande bande passante optimisée pour le repérage temporel des échos et permettre la mesure de la distance entre la cible et le télémètre. Sa performance est principalement limitée par le bruit propre du détecteur et des circuits de type transimpédance et d'amplification associés. La résolution de la modulation temporelle permet une mesure précise de la distance. Une photodiode à avalanche permet d'améliorer le rapport entre l'intensité du signal et l'intensité du bruit. Quelques centaines voire milliers de photons sont nécessaires pour obtenir un rapport signal sur bruit suffisant pour limiter les risques de fausse alarme. Le niveau du signal détectable par le détecteur temporel 11 est beaucoup plus élevé que celui détectable par le détecteur spatial 10.

Avantageusement, le télémètre 1 comprend un dispositif d'orientation 12 de l'axe de télémétrie comprenant la voie d'émission et la voie de réception. Ce dispositif peut être dynamique pour permettre la poursuite fine de la cible à partir des informations d'écartométrie de la détection spatiale.

Avantageusement, le dispositif de réception comprend en outre un volet de protection escamotable 13 afin de protéger le récepteur lorsqu'aucune détection n'est nécessaire.

Avantageusement, le dispositif de réception 4 comprend des moyens de mise en forme des données pour leur traitement numérique. La fréquence d'échantillonnage serait de 59,958 MHz pour un pas de mesure de distance de 2,5 m. Toutefois, une fréquence d'échantillonnage plus élevée peut être retenue pour une meilleure représentativité des impulsions lors des traitements.

L'unité de traitement 4 comprend les moyens suivants :

- Des moyens de sélection 14 qui établissent la valeur I d'intégration du signal spatial $S_S$ issu de la détection spatiale et sélectionnent les trames issues du détecteur temporel qui sont à post-intégrer,

- Des moyens 16 de post-intégration des trames temporelles sélectionnées,

- Des moyens 17 de calcul de la distance entre la cible et le télémètre, à partir du résultat fourni par les moyens de post-intégration.

Selon un premier mode de réalisation montré figure 1a, ces moyens de sélection activent la détection spatiale ou la détection temporelle, en fonction de la valeur I d'intégration de $S_S$. Ces moyens de sélection sont par exemple assurés par des moyens de commutation permettant l'aiguillage des échos rétrodiffusés 31 vers le détecteur spatial 10 ou le détecteur temporel 11. Ces moyens de commutation comportent une commande de commutation 14b apte à établir une décision en fonction de I et un commutateur 14a apte à exécuter cette décision. Les moyens de commutation 14a, 14b aiguillent vers le détecteur spatial 10 pendant la détection spatiale. Quand la détection spatiale est assurée, les moyens de commutation 14a, 14b basculent en position d'aiguillage vers le détecteur temporel 11, pour l'acquisition d'un groupe de trames. Selon ce mode de réalisation, toutes les trames du groupe issues du détecteur temporel 11 sont transmises aux moyens de post-intégration 16, car la sélection est intervenue en amont du détecteur temporel.

Selon un deuxième mode de réalisation montré en figure 1b, variante du premier mode, la commande de commutation 14b est en outre reliée aux moyens de post-intégration 16.

Selon un troisième mode de réalisation montré figure 1c, les moyens de sélection sont des moyens de discrimination 14 qui sont reliés en entrée au dispositif de détection spatiale 10 et au dispositif de détection temporelle 11 et en sortie aux moyens 16 de post-intégration. Les deux détecteurs spatiale et temporelle sont actifs pour toutes les impulsions. En fonction de la valeur I d'intégration de $S_S$, il y a discrimination de la trame issue du dispositif de détection temporelle 11, pour déterminer si elle est à transmettre aux moyens de post-intégration 16. La répartition est statique entre la détection spatiale et la détection temporelle. Il s'agit par exemple d'une lame semi-transparente. Selon ce mode de réalisation, seulement certaines trames du groupe issues du détecteur temporel 11 sont transmises aux moyens de post-intégration 16, car la sélection est intervenue en aval du détecteur temporel.

L'unité de traitement 4 comprend avantageusement des moyens 15 de repérage temporel des trames $S_T$, qui leur associent les datations des émissions fournies par le dispositif d'émission 2 (étapes 206.1, 302) ; ils sont situés en sortie du dispositif d'émission 2 et en entrée des moyens de post-intégration 16. Ils peuvent éventuellement être intégrés aux moyens de sélection. Ce repérage temporel est indispensable dans le cas d'une cible mobile comme décrit plus loin, mais pas pour une cible fixe ; mais lorsqu'on ne sait pas a priori si la cible est fixe ou mobile, on réalise ce repérage temporel par défaut.

Le télémètre 1, selon un aspect de l'invention, permet de localiser la partie la plus contributive de la cible, d'orienter finement l'axe d'émission sur cette partie et de la télémétrer. Il permet ainsi de limiter la durée d'attente avant l'affichage de la distance de la cible lorsque des impulsions laser sont tirées à côté de la cible.

Plusieurs modes de fonctionnement du télémètre 1 peuvent être utilisés, tous basés sur une post-intégration d'échos laser détectés par le détecteur temporel, et préalablement sélectionnés en fonction du signal issu du détecteur spatial : soit la détection spatiale est alternative à la détection temporelle avec éventuellement une variante, soit la détection spatiale est simultanée à la détection temporelle.

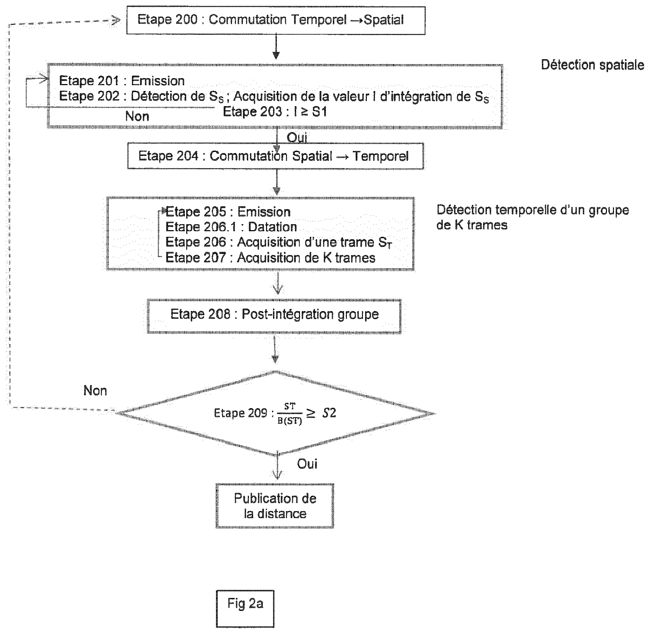

La figure 2a représente un mode de fonctionnement du télémètre selon le premier mode d'utilisation, lorsque la détection spatiale est alternative à la détection temporelle. Le télémètre utilisé est celui décrit en relation avec la figure 1a.

Dans une première étape 200, une détection spatiale est activée jusqu'à détection d'une cible dont la mesure de la distance entre la cible et le télémètre peut être souhaitée, cette étape de détection spatiale comprend les sous-étapes 201, 202 et 203. Éventuellement, la détection de la présence d'une cible située à une distance inférieure à la distance de télémétrie minimale est activée ce qui permet d'assurer la sécurité oculaire du dispositif.

Dans une sous-étape 201, une impulsion laser est émise par le dispositif d'émission 2. Dans une sous-étape 202, la détection spatiale est en intégration pendant une durée correspondant au temps d'aller-retour des émissions dans le domaine ou sous-domaine d'utilisation du télémètre, de manière à acquérir une valeur d'intégration I. Par exemple, pour une cible située dans un sous-domaine de distance recherchée compris entre 40 et 50 km, la fenêtre d'intégration sera comprise entre 266 $\mu$s et 333 $\mu$s, l'instant d'émission de l'impulsion correspondant au temps zéro, le domaine correspondant à l'intervalle entre le télémètre et sa distance maximale d'émission, par entre 0 et 80 km. Dans une étape 203, la valeur d'intégration I est comparée à une valeur seuil S1, préalablement fixée. Si la valeur d'intégration I est inférieure à la valeur seuil S1, l'écho de la cible n'est pas suffisant. Il est alors inutile d'activer la détection temporelle et les sous-étapes 201 à 203 sont réitérées. Dans ce cas, soit la direction de l'axe de télémétrie ou la fenêtre temporelle est changée, soit il est décidé qu'il n'y a pas de cible détectable. Les étapes 202 et 203 sont assurées par le détecteur spatial 10 et les moyens de commutation 14a, 14b.

Si la valeur d'intégration I est supérieure à la valeur seuil S1, cela signifie nécessairement qu'une cible est présente, les étapes suivantes de détection temporelle utiliseront des trames comprenant du signal issu de la cible en plus du bruit dans le domaine ou le sous-domaine de distance recherchée. La commutation dans une étape 204 bascule pour permettre la détection temporelle. Un groupe de K trames, est acquis cette étape comprenant les sous-étapes 205 à 207.

Dans la sous-étape 205, le télémètre émet une nouvelle impulsion laser au moyen du dispositif d'émission 2. Dans la sous-étape 206, une trame de données $S_T$ est enregistrée pendant la fenêtre temporelle de retour de l'écho de la cible correspondant au domaine ou au sous-domaine de distance recherchée ; et éventuellement datée lors d'une sous-étape 206.1, comme on le verra plus loin dans le cas d'une cible mobile. Suivant les caractéristiques du système et le type de cible que l'on souhaite détecter, la direction d'émission du laser est considérée comme stable sur la cible pour un nombre K donné d'émissions. La sous-étape 207 gère l'acquisition d'un groupe de K trames en répétant les étapes 205 à 206. Ces K trames sont transmises aux moyens de post-intégration 16 en vue de l'étape 208 de post-intégration. Selon ce mode de fonctionnement alternatif (ou séquentiel), toutes les trames issues du détecteur temporel sont prises en compte pour la post-intégration, car la sélection est intervenue en amont de la détection temporelle.

Dans une étape 209 assurée par les moyens de post-intégration 16, on vérifie si le résultat de l'étape 208 de post-intégration des K trames permet la publication d'une distance avec une probabilité acceptable de fausse alarme autrement dit si le résultat de la post intégration est supérieur à une deuxième valeur seuil S2. S'il n'est pas possible d'extraire une distance par les moyens de calcul 17, c'est-à-dire si la post-intégration n'est pas encore suffisante pour publier la distance (=test de l'étape 209 négatif), un nouveau cycle a lieu : les moyens de commutation relancent une phase de détection spatiale de la présence de la cible puis K nouvelles trames sont cumulées pour être ajoutées à la post-intégration précédentes.

Lorsque l'axe de télémétrie et la cible sont en mouvement l'un par rapport à l'autre, les informations de présence de la cible sur l'axe de télémétrie par l'enchaînement des étapes 202 et 203 peuvent éventuellement servir à la poursuite de la cible.

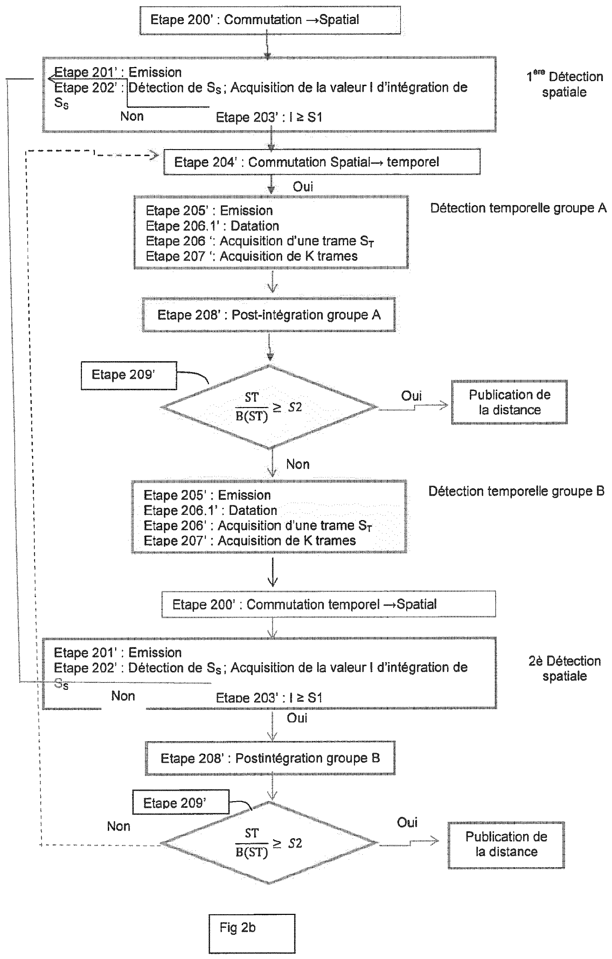

Pour réduire les temps morts de commutation, une variante de ce mode de fonctionnement peut être mise en oeuvre. Le cycle décrit ci-dessus peut être amendé de la manière suivante, décrit en relation avec la figure 2b. Le télémètre utilisé est celui décrit en relation avec la figure 1b. Selon cette variante, après l'acquisition d'un groupe A de trames et leur post-intégration, un deuxième groupe B de trames est acquis. Puis les moyens de sélection activent la détection spatiale. Si la détection spatiale détecte, dès la première impulsion la présence de la cible, le groupe B est post-intégré. Sinon le groupe B est rejeté et la détection spatiale continue. Suivant le résultat de la post-intégration du groupe A, si la distance n'est pas obtenue, il n'y a pas de modification de la sélection. Il y a modification de la sélection en position détection spatiale si la distance est obtenue.

La détection spatiale dite 1ère détection spatiale est activée (étapes 201', 202', 203'). Lorsque la présence de la cible est affirmée par la détection spatiale (test positif de l'étape 204'), il y a acquisition d'un groupe A de K trames de détection temporelle (étapes 205', 206.1', 206', 207'). La post-intégration (étape 208') de ce groupe A est faite. Soit la distance peut être publiée (car test étape 209' positif) et la détection spatiale est alors activée pour une prochaine télémétrie (on repart vers une 1ère détection spatiale). Si le test 209' pour ce groupe A est négatif, un deuxième groupe B de K trames est acquis (étapes 205', 206.1', 206', 207'). Ce deuxième groupe B est gardé en mémoire. Les moyens de commutation commutent vers le détecteur spatial (étape 200). Une détection spatiale dite 2è détection spatiale est activée.

- Si cette 2è détection spatiale confirme la présence de la cible (test positif de l'étape 203'), alors ce deuxième groupe B de K trames de détection temporelle est post-intégré en étant cumulé au groupe A (étape 208'). Si le test 209' est positif suite à cette post-intégration du groupe B, le processus est terminé par la publication de la distance. Sinon, les moyens de commutation commutent vers le détecteur temporel et le processus reprend à l'acquisition d'un groupe A de K trames (= détection temporelle groupe A).

- Si la 2è détection spatiale ne confirme pas la présence de la cible, le deuxième groupe B de K trames de détection temporelle est rejeté. Et le processus continu pour une nouvelle 1ère détection spatiale de la cible.

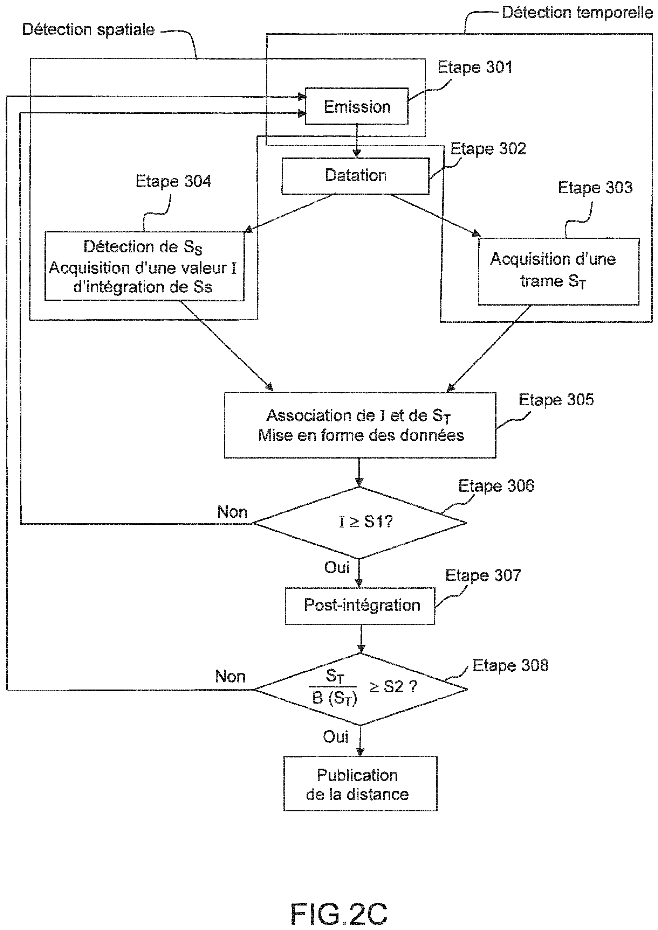

La figure 2c présente un mode de fonctionnement du télémètre lorsque la détection spatiale est simultanée à la détection temporelle, selon un autre mode de réalisation. Le télémètre utilisé est celui décrit en relation avec la figure 1c.

Éventuellement, la détection de la présence d'une cible à une distance inférieure à la distance de télémétrie minimale est activée ce qui permet d'assurer la sécurité oculaire du dispositif.

La mesure de la distance se fait suivant le processus composé de cycles et décrit en figure 2c. Dans une étape 301, le télémètre, selon un aspect de l'invention, émet une impulsion laser au moyen du dispositif d'émission 2. La détection temporelle est activée simultanément à la détection spatiale. Tant qu'une cible n'est pas localisée par détection spatiale, le télémètre émet une nouvelle impulsion.

Chaque impulsion est éventuellement datée dans une étape 302, comme on le verra plus loin.

Dans une étape 303 de détection temporelle, une trame de données $S_T$ est enregistrée pendant la fenêtre temporelle de retour de l'écho de la cible dans le domaine et le sous-domaine de distance recherchée, au moyen du détecteur temporel 11. Cette trame de données $S_T$ est potentiellement utilisable pour le calcul de la distance entre la cible et le télémètre.

Dans une étape 304 simultanée à l'étape 303 et assurée au moyen du détecteur spatial 10, la détection spatiale est en intégration pendant la même fenêtre temporelle de retour de l'écho de la cible dans le domaine ou le sous-domaine de distance recherchée, de manière à acquérir une valeur d'intégration I issue donc du même écho laser.

Dans une étape 305 assurée par les moyens de discrimination 14, les informations spatiales Ss issues de la détection spatiale et la trame de données $S_T$ issue de la détection temporelle, sont associées pour un traitement ultérieur des données, car issues du même écho laser. Elles sont par exemple associées sous la forme d'un bloc de données comportant I, $S_T$ et la date d'émission de l'impulsion.

L'étape 306 d'analyse des informations spatiales également assurée par les moyens de discrimination 14, conclut soit que l'écho de la cible n'est pas suffisant et dans ce cas le bloc de donné acquis au cours de cette itération est rejeté et le processus reprend à l'étape 301, soit l'écho de la cible est suffisant et dans ce cas on passe à l'étape 307 : si I > S1, alors $S_T$ et la date sont communiquées aux moyens de post-intégration 16.

L'étape 307 réalise la post-intégration de la trame temporelle $S_T$ avec les données accumulées lors des cycles précédents. Selon ce mode de fonctionnement simultané, certaines trames issues du détecteur temporel sont prises en compte pour la post-intégration, mais généralement pas toutes, car la sélection est intervenue en aval de la détection temporelle.

Dans une étape 308 assurée par les moyens de post-intégration 16, il est vérifié que le signal obtenu à l'issue de l'étape de post-intégration des trames permet la publication d'une distance : le niveau du signal extrait est comparé à un seuil S2 au-dessus duquel la probabilité de fausse alarme est acceptable. S'il n'y a pas de distance publiable par les moyens de calcul 17, le processus est réitéré à partir de l'étape 301 pour cumuler une nouvelle trame jusqu'à ce qu'une distance soit publiable. Lorsque le niveau du signal extrait est supérieur à un seuil S2 au-dessus duquel la probabilité de fausse alarme est acceptable le processus se termine par la publication de la distance.

Reprenons l'exemple proposé en préambule : pour un gain de 10, la post-intégration ne portera que sur 100 trames valides soit 200 trames enregistrées au lieu de 400 trames lorsqu'on n'utilise pas le télémètre, selon un aspect de l'invention.

Abordons à présent le cas d'une cible mobile.

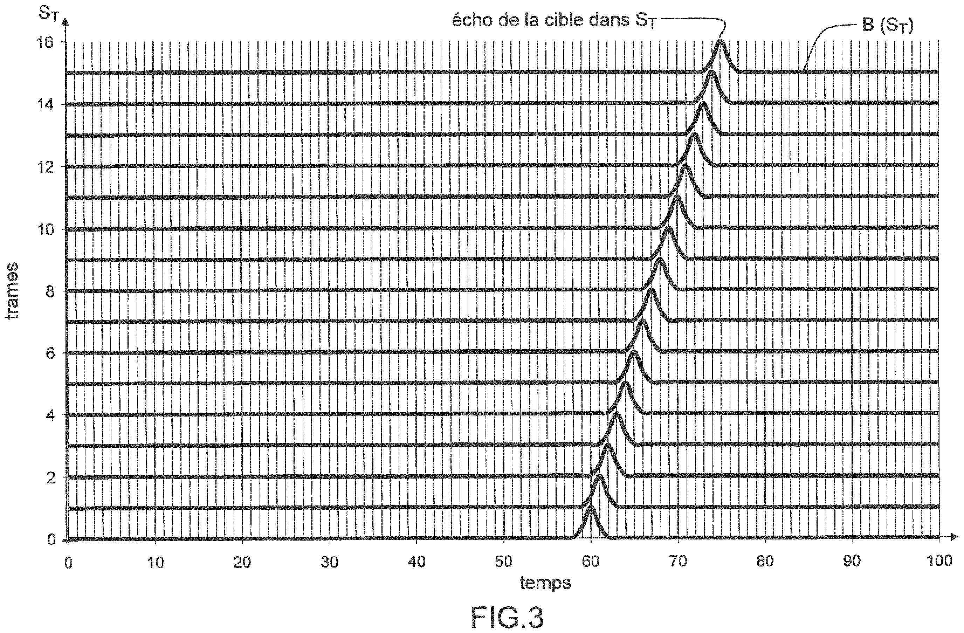

La figure 3 représente l'enregistrement de 16 trames contenant un écho de la cible, la vitesse relative entre la cible et le télémètre étant connue et constante. Une correction tenant compte de la datation de l'émission de l'impulsion correspondant à chaque trame et de la vitesse relative permet de se rapprocher du processus nominal pour faire l'étape de post-intégration. La distance obtenue entre la cible et le télémètre ne sera valable qu'à un instant donnée. La distance obtenue doit donc être datée. A tout autre moment une correction de la distance devra être faite en tenant compte de la vitesse relative.

Si la vitesse est insuffisamment connue, plusieurs hypothèses de vitesse devront être testées. Le nombre d'hypothèses de vitesse n correspond à la vitesse v relative entre la cible et le télémètre multiplié par le temps Δt entre la première et la dernière trame et divisé par la résolution en distance R, n=v.Δt/R.

Par exemple, en supposant une durée entre la première et la dernière trame de 1 seconde, une vitesse relative pouvant varier de -20 m.s$^{-1}$ à +20 m.s$^{-1}$ et une résolution en distance de 2,5 m, un minimum de 16 hypothèses de vitesse devront être testées.

Or, pour que l'étape de post-intégration soit efficace le signal de la cible doit se sommer à travers toutes les trames.

Par conséquent, pour chaque hypothèse de vitesse, un calcul de la distance entre le télémètre et la cible est réalisé en tenant compte du repère temporel de l'émission de chaque trame et de l'hypothèse de vitesse choisie.

L'hypothèse de vitesse dont le calcul, suite à l'étape de post-intégration, donne le plus fort signal est la plus probable. La distance est fournie avec une date et une vitesse probable.

Prenons l'exemple d'un télémètre à 100Hz et d'une cible où, par rapport à la limite de détection en une seule impulsion, un cas idéal d'un gain de 10 est nécessaire. Dans le cas où la cible serait bien centrée pendant la durée de la télémétrie, la probabilité de présence de l'écho dans chaque trame serait de 1. La post-intégration se fera en 100 trames. La durée entre la première et la dernière trame est de 1 seconde, la vitesse relative maximale de +20 m.s$^{-1}$ et la résolution en distance de 2,5 m, le nombre d'hypothèses de vitesse est 16, comme nous l'avons vu précédemment.

Si la probabilité de présence de l'écho de la cible dans une trame est de ½, 400 trames sont alors nécessaires, comme nous l'avons vu précédemment, pour obtenir un rapport signal sur bruit identique à celui obtenu avec une probabilité de présence de 1. Le nombre de trame est donc multiplié par un facteur 4.

Le nombre d'hypothèses de vitesse est aussi multiplié par 4, soit 64 en raison de l'augmentation du temps entre la première et la dernière trame qui passe de 1 à 4 s.

Par conséquent, le nombre d'opérations à réaliser lors de l'étape de post-intégration est multiplié au final par un facteur 4X4=16.

Dans le cas de l'utilisation d'un télémètre, selon un aspect de l'invention, le bilan est le suivant. Le nombre de trames à enregistrer est multiplié par 2 à cause de la probabilité ½ de présence de la cible dans la trame, le nombre de trames à traiter en post-intégration reste le même : 100 trames car toutes ces trames contiennent l'écho de la cible et le nombre d'hypothèses de vitesse est multiplié par deux car le temps entre la première émission et la dernière émission est multiplié par 2. Le nombre d'opérations à réaliser lors de l'étape de post-intégration est multiplié par un facteur 2 uniquement à cause du doublement du nombre d'hypothèse de vitesse.

Ainsi, à l'aide de cette invention, dans le cas d'une cible mobile où la probabilité de présence de l'écho de la cible dans une trame est de 1/a, le temps d'acquisition et le nombre d'opérations lors de l'étape de post-intégration en tenant compte des hypothèses de vitesse relative est multiplié par a. Alors que sans cette invention, dans le cas d'une cible mobile où la probabilité de présence de l'écho de la cible dans une trame est de 1/a, le temps d'acquisition est multiplié par a$^2$ et le nombre d'opérations lors de l'étape de post-intégration en tenant compte des hypothèses de vitesse relative est multiplié par a$^4$.

| | Cible fixe | Cible mobile centrée | Cible mobile instable | |
| --- | --- | --- | --- | --- |
| | | | Sans invention | Selon invention |
| Nombre de trames pour post-intégration | $\propto N$ | $\propto N$ | $\propto a^2 \cdot N$ | $\propto N$ |
| Probabilité de présence de la cible dans la trame | 1 | 1 | $1/a$ | $1/a$ |
| Durée d'acquisition | t | t | $a^2 \cdot t$ | $a \cdot t$ |
| Hypothèses de vitesse | 1 | V | $a^2 \cdot V$ | $a \cdot V$ |
| Nombre d'opération | $\propto N$ | $\propto N \cdot V$ | $\propto N \cdot a^2 \cdot a^2 \cdot V$ | $\propto N \cdot a \cdot V$ |

## Revendications

1. Dispositif de mesure d'une distance d'une cible au moyen d'un télémètre (1) comprenant :

   - un émetteur à impulsions laser (2),
   - un récepteur (3) des échos laser rétrodiffusés (31) par la cible, comportant
   un dispositif de détection spatiale (10) qui comprend au moins une photodiode montée en intégrateur et est apte à fournir un signal dit spatial, et
   un dispositif de détection temporelle (11) qui comprend au moins une photodiode couplée à un circuit transimpédance et est apte à fournir un signal dit temporel,

- des moyens de traitement (4) du signal spatial et du signal temporel, comportant une unité (17) de calcul de la distance de la cible, le signal temporel étant sous la forme d'une trame de données qui est l'enregistrement de données détectées pendant une durée prédéterminée,

**caractérisé en ce que** les moyens de traitement (4) comprennent :

- des moyens (16) de post-intégration de signaux temporels, reliés en sortie à l'unité de calcul de la distance de la cible,
- reliés au dispositif de détection spatiale (10) et au dispositif de détection temporelle (11), des moyens (14) de sélection des signaux temporels à transmettre aux moyens de post-intégration, aptes à établir une valeur d'intégration (I) du signal spatial issu du dispositif de détection spatiale (10) et à sélectionner les trames issues du détecteur temporel (11) en fonction de la valeur d'intégration (I).

2. Dispositif selon la revendication 1 dans lequel les moyens de sélection des signaux temporels comportent une commande de commutation (14b) reliée en sortie au dispositif de détection temporelle (11) via un commutateur (14a), et reliée en entrée au dispositif de détection spatiale (10) et apte à commuter le dispositif de détection temporelle (11) via le commutateur (14a) en fonction du signal spatial, et en ce que les moyens (16) de post-intégration sont reliés en entrée au dispositif de détection temporelle (11).

3. Dispositif selon la revendication précédente, dans lequel la commande de commutation (14b) est en outre reliée aux moyens (16) de post-intégration.

4. Dispositif selon la revendication 1 dans lequel les moyens de sélection des signaux temporels sont des moyens de discrimination (14) reliés en entrée au dispositif de détection spatiale (10) et au dispositif de détection temporelle (11) et en sortie aux moyens (16) de post-intégration.

5. Dispositif selon l'une des revendications précédentes dans lequel les moyens de traitement (4) comprennent des moyens de repérage temporel (15) des trames.

6. Dispositif selon l'une des revendications précédentes dans lequel l'émetteur (2) a une direction d'émission et le récepteur (3) a une direction de réception et comprend en outre un dispositif d'alignement de la direction d'émission et de la direction de réception (12).

7. Dispositif selon l'une des revendications précédentes dans lequel l'émetteur à impulsion laser (2) comprend des moyens pour adapter la divergence et pour collimater le faisceau laser à l'infini.

8. Dispositif selon l'une des revendications précédentes comprenant en outre des moyens de détection d'une présence d'une cible pour des distances inférieures à la distance minimale de télémétrie, les moyens de détection étant adaptés pour désactiver le fonctionnement de l'émission laser et pour assurer la sécurité oculaire du dispositif à partir de la distance nulle.

9. Dispositif selon l'une des revendications précédentes comprenant en outre des moyens d'orientation de l'axe de télémétrie.

10. Dispositif selon l'une des revendications précédentes comprenant en outre des moyens de mesure d'écartométrie entre l'axe de télémétrie et la position de la cible, les moyens de mesure étant connectés au détecteur spatial.

11. Procédé de mesure de la distance d'une cible au moyen d'un télémètre (1) selon l'une des revendications précédentes, **caractérisé en ce qu'**il comprend :

- une étape de détection spatiale comprenant une sous-étape (202, 301) d'émission d'une impulsion laser par le dispositif d'émission (2), une sous-étape (203, 304) de détection du signal spatial Ss et d'acquisition d'une valeur I d'intégration de Ss,
- une étape de détection temporelle comprenant une sous-étape d'émission d'impulsions laser par le dispositif d'émission (2), et une sous-étape d'acquisition d'un signal temporel St sous forme de trames de données,
- une étape (208, 307) de post-intégration des trames de données St après sélection des trames en fonction de la valeur I d'intégration du signal spatial Ss.
- lorsque le résultat de la post-intégration est supérieur à un seuil (étape 209, 308), une étape de calcul de la distance.

**12.** Procédé de mesure de la distance d'une cible selon la revendication précédente au moyen d'un télémètre (1) selon l'une des revendications 1 à 10 prise en combinaison avec la revendication 2, **caractérisé en ce qu'**il comprend les étapes séquentielles suivantes :

- une étape de détection spatiale comprenant une sous-étape (201) d'émission d'une impulsion laser par le dispositif d'émission (2), une sous-étape (202) de détection du signal spatial $S_S$ correspondant à l'écho laser de ladite impulsion et d'acquisition d'une valeur I d'intégration de $S_S$, et lorsque la valeur I est inférieure à un seuil prédéterminé S1 (étape 203), l'étape précédente est réitérée,
- sinon une cible ayant alors été détectée, une étape de détection temporelle est mise en oeuvre comprenant une sous-étape (205) d'émission d'autres impulsions laser par le dispositif d'émission (2), et une sous-étape (206, 207) d'acquisition d'un signal temporel $S_T$ sous forme de trames de données, correspondant aux échos laser de ces autres impulsions,
- une étape (208) de post-intégration des trames de données $S_T$ obtenues lors de l'étape de détection temporelle.

**13.** Procédé de mesure de la distance d'une cible selon la revendication précédente au moyen d'un télémètre (1) selon l'une des revendications 1 à 10 prise en combinaison avec la revendication 3, **caractérisé en ce qu'**il comprend les étapes séquentielles suivantes :

- une étape de 1$^{ère}$ détection spatiale comprenant une sous-étape (201') d'émission d'une impulsion laser par le dispositif d'émission (2), une sous-étape (202') de détection du signal spatial $S_S$ correspondant à l'écho laser de ladite impulsion et d'acquisition d'une valeur I d'intégration de $S_S$, et lorsque la valeur I est inférieure à un seuil prédéterminé S1 (étape 203'), les sous-étapes précédentes sont réitérées,
- sinon une cible ayant alors été détectée, une étape de détection temporelle est mise en oeuvre comprenant une sous-étape (205') d'émission d'autres impulsions laser par le dispositif d'émission (2), et une sous-étape (206', 207') d'acquisition d'un signal temporel $S_T$ sous forme de trames de données dites groupe A de trames, correspondant aux échos laser de ces autres impulsions,
- une étape (208') de post-intégration de ce groupe A de trames de données $S_T$ obtenues lors de l'étape de détection temporelle,
- une étape de détection temporelle est mise en oeuvre comprenant une sous-étape (205') d'émission d'autres impulsions laser par le dispositif d'émission (2) différentes de celles du groupe A, une sous-étape (206', 207') d'acquisition d'un signal temporel $S_T$ sous forme de trames de données dites groupe B de trames, correspondant aux échos laser de ces autres impulsions, et une sous-étape de mise en mémoire de ce groupe B de trames,
- une étape de 2è détection spatiale comprenant une sous-étape (201') d'émission d'une impulsion laser par le dispositif d'émission (2), une sous-étape (202') de détection du signal spatial $S_S$ correspondant à l'écho laser de ladite impulsion et d'acquisition d'une valeur I d'intégration de $S_S$, lorsque la valeur I est supérieure à un seuil prédéterminé S1 (étape 203'), la détection spatiale étant confirmée, une étape (208') de post-intégration du groupe B de trames de données,
- puis acquisition d'un nouveau groupe A de trames,
- et lorsque la valeur I est inférieure à un seuil prédéterminé S1 (étape 203'), le cycle reprend au niveau de la première détection spatiale.

**14.** Procédé de mesure de la distance d'une cible selon la revendication 11 au moyen d'un télémètre (1) selon l'une des revendications 1 à 10 prise en combinaison avec la revendication 4, **caractérisé en ce qu'**il comprend les étapes suivantes:

- une étape de détection spatiale comprenant une sous-étape (301) d'émission d'une impulsion laser par le dispositif d'émission (2), une sous-étape (304) de détection du signal spatial $S_S$ correspondant à l'écho laser de ladite impulsion et d'acquisition d'une valeur I d'intégration de $S_S$ par les moyens de sélection et une sous-étape (303) simultanée de détection d'un signal temporel $S_T$ correspondant au même écho laser de ladite impulsion,
- lorsque la valeur I est inférieure à un seuil prédéterminé S1 (étape 306), l'étape précédente est réitérée,
- sinon une cible ayant alors été détectée, une étape de post-intégration (307) des trames de données $S_T$ correspondantes, par les moyens de post-intégration (16).

**15.** Procédé selon l'une des revendications 11 à 13, comprenant en outre une étape (206.1, 302) de repérage temporel des trames préalablement à leur post-intégration.

**16.** Procédé selon l'une des revendications 11 à 14 dans lequel la cible à télémétrer est mobile.

**17.** Procédé selon la revendication précédente dans lequel les étapes sont réitérées pour différentes hypothèses de vitesse relative entre la cible et le télémètre.

**Patentansprüche**

**1.** Vorrichtung zum Messen einer Entfernung eines Ziels mit einem Entfernungsmesser (1), die Folgendes umfasst:

- einen Laserimpulssender (2),
- einen Empfänger (3) von vom Ziel zurückgestreuten (31) Laserechos, umfassend:

eine räumliche Erkennungsvorrichtung (10), die wenigstens eine Fotodiode umfasst, die als Integrator montiert ist und ein räumliches Signal liefern kann, und
eine zeitliche Erkennungsvorrichtung (11), die wenigstens eine Fotodiode umfasst, die mit einer Transimpedanzschaltung gekoppelt ist und ein zeitliches Signal liefern kann,

- Mittel (4) zum Verarbeiten des räumlichen Signals und des zeitlichen Signals, umfassend eine Einheit (17) zum Berechnen der Entfernung des Ziels, wobei das zeitliche Signal in Form eines Daten-Frames vorliegt, der die Aufzeichnung von erkannten Daten während einer vorbestimmten Dauer ist,

**dadurch gekennzeichnet, dass** die Verarbeitungsmittel (4) Folgendes umfassen:

- Mittel (16) zum Nachintegrieren von zeitlichen Signalen, am Ausgang verbunden mit der Einheit zum Berechnen der Entfernung des Ziels,
- verbunden mit der räumlichen Erkennungsvorrichtung (10) und der zeitlichen Erkennungsvorrichtung (11), Mittel (14) zum Auswählen der zu den Nachintegrationsmitteln zu sendenden zeitlichen Signale, die einen Integrationswert (I) des räumlichen Signals von der räumlichen Erkennungsvorrichtung (10) bestimmen und die Frames vom zeitlichen Detektor (11) in Abhängigkeit vom Integrationswert (I) auswählen können.

**2.** Vorrichtung nach Anspruch 1, bei der die Mittel zum Auswählen der zeitlichen Signale einen Schaltbefehl (14b) umfassen, am Ausgang über einen Schalter (14a) verbunden mit der zeitlichen Erkennungsvorrichtung (11) und am Eingang verbunden mit der räumlichen Erkennungsvorrichtung (10), und der die zeitliche Erkennungsvorrichtung (11) über den Schalter (14a) in Abhängigkeit von dem räumlichen Signal schalten kann, und dadurch, dass die Nachintegrationsmittel (16) am Eingang mit der zeitlichen Erkennungsvorrichtung (11) verbunden sind.

**3.** Vorrichtung nach dem vorherigen Anspruch, bei der der Schaltbefehl (14b) ferner mit den Nachintegrationsmitteln (16) verbunden ist.

**4.** Vorrichtung nach Anspruch 1, bei der die Mittel zum Auswählen der zeitlichen Signale Unterscheidungsmittel (14) sind, die am Eingang mit der räumlichen Erkennungsvorrichtung (10) und der zeitlichen Erkennungsvorrichtung (11) und am Ausgang mit den Nachintegrationsmitteln (16) verbunden sind.

**5.** Vorrichtung nach einem der vorherigen Ansprüche, bei der die Verarbeitungsmittel (4) Mittel (15) zum zeitlichen Kennzeichnen der Frames sind.

**6.** Vorrichtung nach einem der vorherigen Ansprüche, bei der der Sender (2) eine Senderichtung hat und der Empfänger (3) eine Empfangsrichtung hat und ferner eine Vorrichtung zum Ausrichten der Senderichtung und der Empfangsrichtung (12) umfasst.

**7.** Vorrichtung nach einem der vorherigen Ansprüche, bei der der Laserimpulssender (2) Mittel zum Anpassen der Divergenz und zum Kollimieren des Laserstrahls ins Unendliche umfasst.

**8.** Vorrichtung nach einem der vorherigen Ansprüche, die ferner Mittel zum Erkennen der Anwesenheit eines Ziels für Entfernungen umfasst, die kleiner sind als die Mindestentfernung für eine Entfernungsmessung, wobei die Erkennungsmittel zum Deaktivieren des Betriebs der Lasersendung und zum Gewährleisten der okularen Sicherheit der Vorrichtung ab der Null-Entfernung ausgelegt sind.

**EP 2 909 649 B1**

9. Vorrichtung nach einem der vorherigen Ansprüche, die ferner Mittel zum Orientieren der Entfernungsmessachse umfasst.

10. Vorrichtung nach einem der vorherigen Ansprüche, die ferner Mittel zum Messen der Abweichung zwischen der Entfernungsmessachse und der Position des Ziels umfasst, wobei die Messmittel mit dem räumlichen Detektor verbunden sind.

11. Verfahren zum Messen der Entfernung eines Ziels mit einem Entfernungsmesser (1) nach einem der vorherigen Ansprüche, **dadurch gekennzeichnet, dass** es Folgendes beinhaltet:

   - einen Schritt des räumlichen Erkennens, der einen Teilschritt (202, 301) des Sendens eines Laserimpulses durch die Sendevorrichtung (2), einen Teilschritt (203, 304) des Erkennens des räumlichen Signals $S_S$ und des Erfassens eines Integrationswertes I von $S_S$ beinhaltet,
   - einen Schritt des zeitlichen Erkennens, der einen Teilschritt des Sendens von Laserimpulsen durch die Sendevorrichtung (2) und einen Teilschritt des Erfassens eines zeitlichen Signals $S_T$ in Form von Daten-Frames beinhaltet,
   - einen Schritt (208, 307) des Nachintegrierens von Daten-Frames $S_T$ nach dem Auswählen von Frames in Abhängigkeit vom Integrationswert I des räumlichen Signals $S_S$,
   - einen Schritt des Berechnens der Entfernung, wenn das Ergebnis der Nachintegration größer ist als eine Schwelle (Schritt 209, 308).

12. Verfahren zum Messen der Entfernung eines Ziels nach dem vorherigen Anspruch mittels eines Entfernungsmessers (1) nach einem der Ansprüche 1 bis 10 in Kombination mit Anspruch 2, **dadurch gekennzeichnet, dass** es die folgenden Folgeschritte beinhaltet:

   - einen Schritt des räumlichen Erkennens, der einen Teilschritt (201) des Sendens eines Laserimpulses durch die Sendevorrichtung (2), einen Teilschritt (202) des Erkennens des räumlichen Signals $S_S$ entsprechend dem Laserecho des Impulses und des Erfassens eines Integrationswertes I von $S_S$ beinhaltet, und wenn der Wert I kleiner ist als eine vorbestimmte Schwelle S1 (Schritt 203), dann wird der vorherige Schritt wiederholt,
   - andernfalls wird, wenn ein Ziel erkannt wurde, ein Schritt des zeitlichen Erkennens ausgeführt, der einen Teilschritt (205) des Sendens von anderen Laserimpulsen durch die Sendevorrichtung (2) und einen Teilschritt (206, 207) des Erfassens eines zeitlichen Signals $S_T$ in Form von Daten-Frames entsprechend den Laserechos dieser anderen Impulse beinhaltet,
   - einen Schritt (208) des Nachintegrierens von Daten-Frames $S_T$, die während des zeitlichen Erkennungsschrittes erhalten wurden.

13. Verfahren zum Messen der Entfernung eines Ziels nach dem vorherigen Anspruch mittels eines Entfernungsmessers (1) nach einem der Ansprüche 1 bis 10 in Kombination mit Anspruch 3, **dadurch gekennzeichnet, dass** es die folgenden Folgeschritte beinhaltet:

   - einen Schritt der 1. räumlichen Erkennung, der einen Teilschritt (201') des Sendens eines Laserimpulses durch die Sendevorrichtung (2), einen Teilschritt (202') des Erkennens des räumlichen Signals $S_S$ entsprechend dem Laserecho des Impulses und des Erfassens eines Integrationswertes I von $S_S$ beinhaltet, und wenn der Wert I kleiner ist als eine vorbestimmte Schwelle S1 (Schritt 203'), dann werden die vorherigen Teilschritte wiederholt,
   - andernfalls wird, wenn ein Ziel erkannt wurde, ein Schritt des zeitlichen Erkennens durchgeführt, der einen Teilschritt (205') des Sendens von anderen Laserimpulsen durch die Sendevorrichtung (2) und einen Teilschritt (206', 207') des Erfassens eines zeitlichen Signals $S_T$ in Form von Daten-Frames beinhaltet, Gruppe A von Frames genannt, entsprechend den Laserechos dieser anderen Impulse,
   - einen Schritt (208') des Nachintegrierens dieser Gruppe A von Daten-Frames $S_T$, erhalten während des Schrittes des zeitlichen Erkennens,
   - einen Schritt des zeitlichen Erkennens wird durchgeführt, der einen Teilschritt (205') des Sendens von anderen Laserimpulsen durch die Sendevorrichtung (2), die sich von denen der Gruppe A unterscheiden, einen Teilschritt (206', 207') des Erfassens eines zeitlichen Signals $S_T$ in Form von Daten-Frames, Gruppe B von Frames genannt, entsprechend den Laserechos dieser anderen Impulse, und einen Teilschritt des Speicherns dieser Gruppe B von Frames beinhaltet,
   - einen Schritt des 2. räumlichen Erkennens, der einen Teilschritt (201') des Sendens eines Laserimpulses durch die Sendevorrichtung (2), einen Teilschritt (202') des Erkennens des räumlichen Signals $S_S$ entsprechend

**14**

dem Laserecho des Impulses und des Erfassens eines Integrationswerts I von $S_S$, wobei wenn der Wert I größer ist als eine vorbestimmte Schwelle S1 (Schritt 203'), wird die räumliche Erkennung bestätigt, einen Schritt (208') des Nachintegrierens der Gruppe B von Daten-Frames beinhaltet,
- dann Erfassen einer neuen Gruppe A von Frames,
- und wenn der Wert I kleiner ist als eine vorbestimmte Schwelle S1 (Schritt 203'), dann wird der Zyklus an der ersten räumlichen Erkennung wieder aufgenommen.

14. Verfahren zum Messen der Entfernung eines Ziels nach Anspruch 11 mittels eines Entfernungsmessers (1) nach einem der Ansprüche 1 bis 10 in Kombination mit Anspruch 4, **dadurch gekennzeichnet, dass** es die folgenden Schritte beinhaltet:

- einen Schritt des räumlichen Erkennens, der einen Teilschritt (301) des Sendens eines Laserimpulses durch die Sendevorrichtung (2), einen Teilschritt (304) des Erkennens des räumlichen Signals $S_S$ entsprechend dem Laserecho des Impulses und des Erfassens eines Integrationswertes I von $S_S$ durch die Auswahlmittel und einen gleichzeitigen Teilschritt (303) des Erkennens eines zeitlichen Signals $S_T$ entsprechend demselben Laserecho des Impulses beinhaltet,
- wenn der Wert I kleiner ist als eine vorbestimmte Schwelle S1 (Schritt 306), dann wird der vorherige Schritt wiederholt,
- andernfalls, wenn ein Ziel erkannt wurde, einen Schritt (307) des Nachintegrierens der entsprechenden Daten-Frames $S_T$ durch die Nachintegrationsmittel (16).

15. Verfahren nach einem der Ansprüche 11 bis 13, das ferner einen Schritt (206.1, 302) des zeitlichen Kennzeichnens von Frames vor ihrer Nachintegration beinhaltet.

16. Verfahren nach einem der Ansprüche 11 bis 14, in dem das Ziel, dessen Entfernung gemessen werden soll, mobil ist.

17. Verfahren nach dem vorherigen Anspruch, in dem die Schritte für unterschiedliche Hypothesen von relativer Geschwindigkeit zwischen dem Ziel und dem Entfernungsmesser wiederholt werden.

**Claims**

1. A device for measuring a distance of a target by means of a telemeter (1) comprising:

- a laser pulse emitter (2),
- a receiver (3) of the laser echoes backscattered (31) by the target, comprising a spatial detection device (10) which comprises at least one photodiode set up as integrator and is able to provide a so-called spatial signal, and a temporal detection device (11) which comprises at least one photodiode coupled to a transimpedance circuit and is able to provide a so-called temporal signal,
- means of processing (4) of the spatial signal and of the temporal signal, comprising a unit (17) for calculating the distance of the target, the temporal signal being in the form of a data frame which is the recording of data detected over a predetermined duration,

**characterized in that** the means of processing (4) comprise:

- means (16) of post-integration of temporal signals, linked at output to the unit for calculating the distance of the target,
- linked to the spatial detection device (10) and to the temporal detection device (11), means (14) for selecting the temporal signals to be transmitted to the post-integration means, adapted to establish a value (I) of integration of the spatial signal arising from the spatial detection device (10) and select the frames arising from the temporal detector (11) as a function of the integration value (I).

2. The device as claimed in claim 1, in which the means for selecting the temporal signals comprise a switching control (14b) linked at output to the temporal detection device (11) via a switch (14a), and linked at input to the spatial detection device (10) and able to switch the temporal detection device (11) via the switch (14a) as a function of the spatial signal, and in that the post-integration means (16) are linked at input to the temporal detection device (11).

3. The device as claimed in the preceding claim, in which the switching control (14b) is furthermore linked to the post-integration means (16).

4. The device as claimed in claim 1, in which the means for selecting the temporal signals are discrimination means (14) linked at input to the spatial detection device (10) and to the temporal detection device (11) and at output to the post-integration means (16).

5. The device as claimed in one of the preceding claims, in which the means of processing (4) comprise means of temporal labeling (15) of the frames.

6. The device as claimed in one of the preceding claims, in which the emitter (2) has a direction of emission and the receiver (3) has a direction of reception and furthermore comprises a device for aligning the direction of emission and the direction of reception (12).

7. The device as claimed in one of the preceding claims, in which the laser pulse emitter (2) comprises means for adapting the divergence and for collimating the laser beam at infinity.

8. The device as claimed in one of the preceding claims, furthermore comprising means for detecting a presence of a target for distances less than the minimum telemetry distance, the detecting means being adapted for deactivating the operation of the laser emission and for ensuring the ocular safety of the device from the zero distance.

9. The device as claimed in one of the preceding claims, furthermore comprising means for orienting the telemetry axis.

10. The device as claimed in one of the preceding claims, furthermore comprising means for measuring deviometry between the telemetry axis and the position of the target, the measuring means being connected to the spatial detector.

11. A method for measuring the distance of a target by means of a telemeter (1) as claimed in one of the preceding claims, **characterized in that** it comprises:

   - a spatial detection step comprising a sub-step (202, 301) of emission of a laser pulse by the emission device (2), a sub-step (203, 304) of detecting the spatial signal $S_S$ and of acquiring a value I of integration of $S_S$,
   - a temporal detection step comprising a sub-step of emission of laser pulses by the emission device (2), and a sub-step of acquiring a temporal signal $S_T$ in the form of data frames,
   - a step (208, 307) of post-integration of the data frames $S_t$ after selecting the frames as a function of the integration value I of the spatial signal $S_S$,
   - when the result of the post-integration is above a threshold (step 209, 308), a step of calculating the distance.

12. The method for measuring the distance of a target as claimed in the preceding claim by means of a telemeter (1) as claimed in one of claims 1 to 10 taken in combination with claim 2, **characterized in that** it comprises the following sequential steps:

   - a spatial detection step comprising a sub-step (201) of emission of a laser pulse by the emission device (2), a sub-step (202) of detecting the spatial signal $S_S$ corresponding to the laser echo of said pulse and of acquiring a value I of integration of $S_S$, and when the value I is below a predetermined threshold S1 (step 203), the previous step is repeated,
   - otherwise a target then having been detected, a temporal detection step is implemented comprising a sub-step (205) of emission of other laser pulses by the emission device (2), and a sub-step (206, 207) of acquiring a temporal signal $S_T$ in the form of data frames, corresponding to the laser echoes of these other pulses,
   - a step (208) of post-integration of the data frames $S_T$ obtained during the temporal detection step.

13. The method for measuring the distance of a target as claimed in the preceding claim by means of a telemeter (1) as claimed in one of claims 1 to 10 taken in combination with claim 3, **characterized in that** it comprises the following sequential steps:

   - a step of 1st spatial detection comprising a sub-step (201') of emission of a laser pulse by the emission device (2), a sub-step (202') of detecting the spatial signal $S_S$ corresponding to the laser echo of said pulse and of acquiring a value I of integration of $S_S$, and when the value I is below a predetermined threshold S1 (step 203'), the previous sub-steps are repeated,
- otherwise a target then having been detected, a temporal detection step is implemented comprising a sub-step (205') of emission of other laser pulses by the emission device (2), and a sub-step (206', 207') of acquiring a temporal signal $S_T$ in the form of data frames termed group A of frames, corresponding to the laser echoes of these other pulses,
- a step (208') of post-integration of this group A of data frames $S_T$ obtained during the temporal detection step,
- a temporal detection step is implemented comprising a sub-step (205') of emission of other laser pulses by the emission device (2), which differ from those of the group A, a sub-step (206', 207') of acquiring a temporal signal $S_T$ in the form of data frames termed group B of frames, corresponding to the laser echoes of these other pulses, and a sub-step of placing this group B of frames in memory,
- a step of 2nd spatial detection comprising a sub-step (201') of emission of a laser pulse by the emission device (2), a sub-step (202') of detecting the spatial signal $S_S$ corresponding to the laser echo of said pulse and of acquiring a value I of integration of $S_S$, when the value I is above a predetermined threshold S1 (step 203'), the spatial detection being confirmed, a step (208') of post-integration of the group B of data frames,
- and then acquisition of a new group A of frames,
- and when the value I is below a predetermined threshold S1 (step 203'), the cycle resumes at the level of the first spatial detection.

14. The method for measuring the distance of a target as claimed in claim 11 by means of a telemeter (1) as claimed in one of claims 1 to 10 taken in combination with claim 4, **characterized in that** it comprises the following steps:

- a spatial detection step comprising a sub-step (301) of emission of a laser pulse by the emission device (2), a sub-step (304) of detecting the spatial signal $S_S$ corresponding to the laser echo of said pulse and of acquisition of a value I of integration of $S_S$ by the selection means and a simultaneous sub-step (303) of detecting a temporal signal $S_T$ corresponding to the same laser echo of said pulse,
- when the value I is below a predetermined threshold S1 (step 306), the previous step is repeated,
- otherwise a target then having been detected, a step (307) of post-integration of the corresponding data frames $S_T$, by the post-integration means (16).

15. The method as claimed in one of claims 11 to 13, furthermore comprising a step (206.1, 302) of temporal labeling of the frames prior to their post-integration.

16. The method as claimed in one of claims 11 to 14, in which the target to be telemetered is mobile.

17. The method as claimed in the preceding claim, in which the steps are repeated for various assumptions of relative speed between the target and the telemeter.

Fig 1a

EP 2 909 649 B1

Fig 1b

DISPOSITF D'EMISSION

Émetteur/Récepteur
De sécurité

2

TELEMETRE

1

5

LASER

6

12

21

7

31

UNITÉ DE TRAITEMENT

15

Datation

4

13

DISPOSITIF DE
RÉCEPTION

8

3

17

Calcul de distance

18

16

14

$S_T$

11

10

Postintégration

Discrimination

Détecteur
temporel

Détecteur
spatial

$S_s$

Fig 1c

EP 2 909 649 B1

Etape 200 : Commutation Temporel →Spatial

Détection spatiale

Etape 201 : Emission
Etape 202 : Détection de $S_S$ ; Acquisition de la valeur I d'intégration de $S_S$
Non — Etape 203 : I ≥ S1

Oui

Etape 204 : Commutation Spatial → Temporel

Détection temporelle d'un groupe
de K trames

Etape 205 : Emission
Etape 206.1 : Datation
Etape 206 : Acquisition d'une trame $S_T$
Etape 207 : Acquisition de K trames

Etape 208 : Post-intégration groupe

Non

Etape 209 : $\dfrac{ST}{B(ST)} \geq S2$

Oui

Publication de
la distance

Fig 2a

21

Etape 200' : Commutation →Spatial

Etape 201' : Emission
Etape 202' : Détection de $S_S$ ; Acquisition de la valeur I d'intégration de $S_S$

Non          Etape 203' : I ≥ S1

1$^{\text{ère}}$ Détection spatiale

Etape 204' : Commutation Spatial→ temporel

Oui

Etape 205' : Emission
Etape 206.1' : Datation
Etape 206 ': Acquisition d'une trame $S_T$
Etape 207 ': Acquisition de K trames

Détection temporelle groupe A

Etape 208' : Post-intégration groupe A

Etape 209'

$$\frac{ST}{B(ST)} \geq S2$$

Oui          Publication de la distance

Non

Etape 205' : Emission
Etape 206.1' : Datation
Etape 206' : Acquisition d'une trame $S_T$
Etape 207' : Acquisition de K trames

Détection temporelle groupe B

Etape 200' : Commutation temporel →Spatial

Etape 201' : Emission
Etape 202' : Détection de $S_S$ ; Acquisition de la valeur I d'intégration de $S_S$

Non          Etape 203' : I ≥ S1

2è Détection spatiale

Oui

Etape 208' : Postintégration groupe B

Etape 209'

Non

$$\frac{ST}{B(ST)} \geq S2$$

Oui          Publication de la distance

Fig 2b

Détection spatiale

Détection temporelle

Etape 301

Emission

Etape 302

Datation

Etape 304

Détection de $S_S$
Acquisition d'une valeur I
d'intégration de Ss

Etape 303

Acquisition d'une
trame $S_T$

Association de I et de $S_T$
Mise en forme des données

Etape 305

Non ← $I \geq S1?$

Etape 306

Oui

Post-intégration

Etape 307

Non ← $\dfrac{S_T}{B\,(S_T)} \geq S2\ ?$

Etape 308

Oui

Publication
de la distance

# FIG.2C

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2364455 A